# EUROPEAN PATENT SPECIFICATION

(11) **EP 4 068 007 B1**
(45) Date of publication and mention of the grant of the patent: **30.10.2024**
(21) Application number: 22164594.8
(22) Date of filing: 28.03.2022
(51) Int. Cl.: G03G 15/08, G03G 21/18, B41J 2/175

(54) **CONSUMABLE CHIP, CONSUMABLE, IMAGE FORMING APPARATUS AND COMMUNICATION METHOD**
VERBRAUCHSCHIP, VERBRAUCHSMATERIAL, BILDERZEUGUNGSGERÄT UND KOMMUNIKATIONSVERFAHREN
PUCE CONSOMMABLE, CONSOMMABLE, APPAREIL DE FORMATION D'IMAGES ET PROCÉDÉ DE COMMUNICATION

(30) Priority: 01.04.2021 CN 202110358080
(43) Date of publication of application: 05.10.2022
(73) Proprietor: Zhuhai Pantum Electronics Co., Ltd., Zhuhai, Guangdong (CN)
(72) Inventor: YU, Chengzhu, Zhuhai, Guangdong (CN); NING, Dan, Zhuhai, Guangdong (CN)
(74) Representative: Sun, Yiming

(56) References cited:
- WO-A1-01/61918
- JP-A- 2005 157 000
- JP-A- 2008 176 345

## Description

### FIELD OF THE DISCLOSURE

The present disclosure generally relates to the field of image forming technology and, more particularly, relates to a consumable chip, a consumable, an image forming apparatus, and a communication method between the image forming apparatus and the consumable chip.

### BACKGROUND

To ensure data security during the communication process between a consumable and an image forming apparatus, a fixed password is often used to encrypt the communication data between the image forming apparatus and the consumable. However, in the process of encrypting the communication data by using the fixed password and sending the communication data to the image forming apparatus, due to the poor stability and reliability of the fixed password, the image forming apparatus is likely to authenticate the consumable that does not meet the quality requirements. The use of the consumable that does not meet the quality requirements for imaging may cause damage to the image forming apparatus and may affect the imaging quality. JP 2005 157000 A discloses an image forming device with an encryption decoder to encipher acquired exhaustion data indicating exhaustion degree of consumable by an encryption key generated using key generation data read from memory mounted on the replaceable unit.

### BRIEF SUMMARY OF THE DISCLOSURE

In view of this, the present disclosure proposes a consumable chip, a consumable, an image forming apparatus and a communication method between the image forming apparatus and the consumable chip, as defined by the enclosed independent claims, which may accurately authenticate the consumable, ensuring that the authenticated consumable is the designated consumable that meets the quality requirements, and preventing the image forming apparatus from being damaged and the image forming quality from being affected due to the use of any other consumable that does not meet the quality requirements.

One aspect of the present disclosure provides a consumable chip, as defined by claim 1.

Another aspect of the present disclosure provides a consumable as defined by claim 5.

Another aspect of the present disclosure provides a consumable as defined by claim 8.

Another aspect of the present disclosure provides an image forming apparatus according to claim 12.

Another aspect of the present disclosure provides a communication method between an image forming apparatus and a consumable according to claim 9.

The disclosed embodiments may have following beneficial effects. The chip control unit of the consumable chip may generate the authentication data using the stored first fixed data representing attribute information of the consumable and first variable data representing the consumption information of the consumable. The image forming apparatus may authenticate the consumable chip using the authentication data. Because the authentication data is dynamically variable, the authentication data received by the image forming apparatus may be highly reliable, and the image forming apparatus may accurately authenticate the consumable, ensuring that the authenticated consumable is the designated consumable that meets the quality requirements, and preventing the image forming apparatus from being damaged and the image forming quality from being affected due to the use of any other consumable that does not meet the quality requirements.

### BRIEF DESCRIPTION OF THE DRAWINGS

To more clearly illustrate the technical solutions in the disclosed embodiments of the present disclosure, drawings to be used in the description of the disclosed embodiments will be briefly described below. It is obvious that the drawings in the following description are certain embodiments of the present disclosure, and other drawings may be obtained by a person of ordinary skill in the art in view of the drawings provided without creative efforts.
Figure 1 illustrates a schematic diagram of an exemplary image forming apparatus consistent with an embodiment of the present disclosure;
Figure 2 illustrates a schematic diagram of an exemplary image forming apparatus and a consumable chip consistent with an embodiment of the present disclosure;
Figure 3 illustrates a schematic flowchart of an exemplary communication method between an image forming apparatus and a consumable chip consistent with an embodiment of the present disclosure;
Figure 4 illustrates a schematic flowchart of another exemplary communication method between an image forming apparatus and a consumable chip consistent with an embodiment of the present disclosure;
Figure 5 illustrates a schematic sub-flowchart of an exemplary communication method between an image forming apparatus and a consumable chip consistent with an embodiment of the present disclosure; and
Figure 6 illustrates a schematic sub-flowchart of another exemplary communication method between an image forming apparatus and a consumable chip consistent with an embodiment of the present disclosure.

### DETAILED DESCRIPTION

To more clearly illustrate aims, technical solutions, and advantages of the disclosed embodiments of the present disclosure, the technical solutions in the disclosed embodiments of the present disclosure will be clearly and fully described with reference to the accompanying drawings in the disclosed embodiments of the present disclosure. Obviously, the described embodiments are some but not all of the embodiments of the present disclosure.

The present disclosure provides an image forming apparatus, a consumable chip and a communication method between the image forming apparatus and the consumable chip. Each of a body side of the image forming apparatus and a chip side may include an electrical contact portion. When the consumable is installed on the image forming apparatus, the electrical contact portion on the body side of the image forming apparatus may be in contact with the electrical contact portion of the chip side. The electrical contact portion may include a conductive plane, a conductive probe, a conductive coil, etc. The image forming apparatus may be configured to perform an image forming job, such as generating, printing, receiving and transmitting image data. The image forming apparatus may include an ink jet printer, a laser printer, a light-emitting diode (LED) printer, a copier, a facsimile machine, a scanner, an all-in-one multifunctional machine, and a multi-functional peripheral (MFP) that performs the above functions in a single device. The image forming apparatus may include an image forming control unit and an image forming unit. The image forming control unit may be configured to control the entire image forming apparatus, and the image forming unit may be configured to form an image on the supplied paper under the control of the image forming control unit based on the image data.

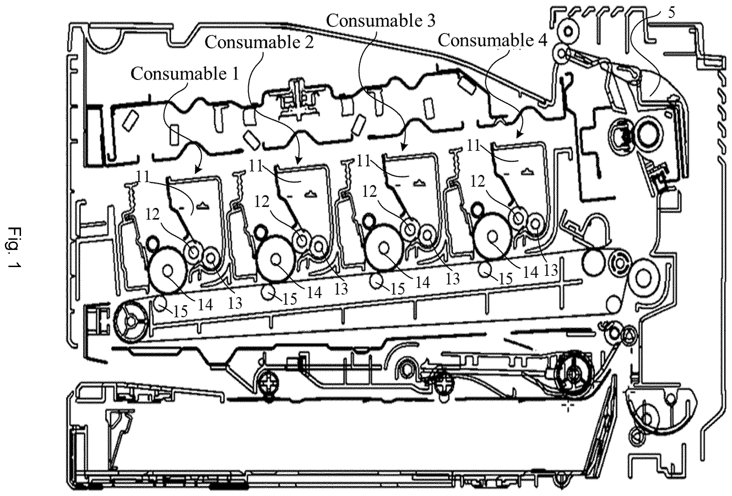

Figure 1 illustrates a schematic diagram of an image forming apparatus consistent with an embodiment of the present disclosure. Referring to Figure 1, as an example of the image forming apparatus, the image forming unit of the image forming apparatus may include: a developer accommodating unit 11, a developing unit 12, a developer conveying unit 13, a photosensitive unit 14, a transfer unit 15 and a fixing assembly 5, etc. The to-be-printed paper may move towards a paper feeding direction, may successively undergo a toner feeding operation of the developer conveying unit 13 and a developing operation of the developing unit 12, may reach a nip region between the photosensitive unit 14 and the transfer unit 15 for transferring, and then may undergo a fixing operation of the fixing assembly 5 to complete the image forming operation. The developer accommodating unit 11 may be configured to accommodate developer, and the developer may include colorful toner, toner and any other material. The developing unit 12 may include a developing roller and any other component. The developer conveying unit 13 may include a powder feeding roller and any other component. The photosensitive unit 14 may include an organic photo-conductor drum, a charging roller and any other component, and the charging roller may be configured to charge the organic photo-conductor drum.

The image forming apparatus may often include at least one consumable that is capable of being detachably installed on the image forming apparatus. The image forming apparatus shown in Figure 1 may be used as an example, four consumables (consumable 1, consumable 2, consumable 3, and consumable 4, respectively as shown in Figure 1) may be detachably installed on the image forming apparatus. The four consumables may be configured to provide developer of four colors of black K, cyan C, magenta M, and yellow Y, respectively, for the image forming apparatus. In another embodiment, a quantity of consumables installed on the image forming apparatus may increase or decrease, for example, the quantity may include one or six, which may not be limited by the present disclosure.

In one embodiment, the consumable may have a split structure, and may include a developing cartridge and a drum cartridge. The developing cartridge and the drum cartridge may be disassembled respectively. The developing cartridge may include a developing cartridge chip, and the drum cartridge may include a drum cartridge chip. The developing cartridge chip and the drum cartridge chip may be configured to store information such as toner content and a quantity of printed pages, respectively. In one embodiment, the developing cartridge may include a case, the developer accommodating unit 11, the developing unit 12 and the developer conveying unit 13. The developer accommodating unit 11 may be located in the case for accommodating the developer, and the developer conveying unit 13 may be configured to convey the developer. The drum cartridge may include the photosensitive unit 14, etc.

In another embodiment, the consumable may have an all-in-one structure. For example, the consumable (consumable 1, consumable 2, consumable 3 or consumable 4) may include the developer accommodating unit 11, the developing unit 12, the developer conveying unit 13, the photosensitive unit 14, and the transfer unit 15, etc. In other words, in the present disclosure, the consumable with the all-in-one structure may often include one consumable chip. The consumable with the split structure may often include two consumable chips, which may be installed in the developing cartridge and the drum cartridge, respectively.

It should be noted that the consumable in the disclosed embodiments may be the above-mentioned developing cartridge or the above-mentioned drum cartridge, or may include both the developing cartridge and the drum cartridge, which may not be limited herein. The consumable in the disclosed embodiments may include any other component, part, and unit in the image forming apparatus that tends to be damaged and needs to be replaced, such as a paper box, a toner cartridge, etc. Correspondingly, the above-mentioned consumable chip may be installed on the above-mentioned consumable, and the consumable chip may be configured to record the state of the consumable to facilitate the image forming apparatus to centrally manage the consumables installed thereon. The consumable chip may store related information of the consumable, such as product model, color/type and production date of a recording material (such as ink, toner), usage information of printing media (such as toner, paper, etc.), a quantity of printed pages, serial number, etc. At the same time, the consumable chip may be authenticated by the image forming apparatus, to prevent the image forming apparatus from using consumable that cannot meet the predetermined quality requirements to perform imaging.

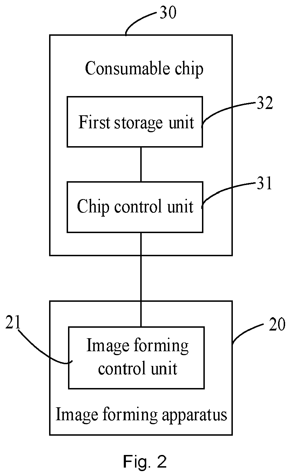

Figure 2 illustrates a schematic diagram of an image forming apparatus and a consumable chip consistent with an embodiment of the present disclosure. Referring to Figure 2, an image forming apparatus 20 may include an image forming control unit 21. A consumable chip 30 may be detachably installed on a consumable, and the consumable may be detachably installed on the image forming apparatus 20. The consumable chip 30 may include a chip control unit 31 and a first storage unit 32.

The image forming control unit 21 may be configured to send an authentication request to the consumable chip 30. The authentication request may be a signal for the image forming apparatus 20 to request authentication data from the consumable chip 30.

The first storage unit 32 may be configured to store first fixed data representing attribute information of the consumable. The chip control unit 31 may be configured to receive the authentication request sent by the image forming apparatus 20, and obtain the first fixed data and first variable data representing consumption information of the consumable based on the authentication request. The chip control unit 31 may be further configured to generate authentication data by performing a calculation on the first fixed data and the first variable data based on a first preset algorithm, and send the authentication data to the image forming apparatus 20 to determine whether the consumable meets expectation.

The chip control unit 31 may be connected to the image forming control unit21 through a data bus, and thus data transmission may be performed between the chip control unit 31 and the image forming control unit 21 through the data bus. The image forming control unit 21 may send the authentication request to the data bus, and the chip control unit 31 may receive the authentication request from the data bus.

The first fixed data may include the serial number of the consumable, the model of the consumable, the capacity of the consumable, or any other fixed attribute information of the consumable. The first fixed data may be fixedly stored in the first storage unit 32, and the first fixed data may not change with the execution of image formation.

The first variable data may include information of a quantity of printed pages, remaining amount of the consumable, consumption amount of the consumable, or any other rewritable consumption information of the consumable. The first variable data may be rewritten or changed according to the consumption status of the consumable in the image forming operation performed by the image forming apparatus 20. The consumable chip 30 may save the first variable data after the image forming apparatus 20 has performed the image forming operation.

The chip control unit 31 may generate the authentication data by performing a calculation on the first fixed data and the first variable data based on the first preset algorithm, which may specifically include: combining the first fixed data and the first variable data to generate first combined data; encrypting the first combined data to generate first to-be-processed data; performing signature calculation on the first to-be-processed data to generate first signature data; and encrypting the first to-be-processed data and the first signature data to generate the authentication data.

Combining the first fixed data and the first variable data to generate the first combined data may include following. In one embodiment, each of the first fixed data and the first variable data may be an entirety, and the two entireties may be spliced without changing the specific content of the first fixed data and the first variable data to generate the first combined data. In another embodiment, the first fixed data may be split to obtain a plurality of first split data, and the first variable data may be split to obtain a plurality of second split data. The plurality of first split data and the plurality of second split data may be arranged according to a preset arrangement rule to generate the first combined data. In certain embodiments, a part of the plurality of first split data and a part of the plurality of second split data may be extracted and randomly arranged to generate the first combined data. The first fixed data and the first variable data may be combined in any other method, which may not be limited by the present disclosure.

Encrypting the first combined data to generate the first to-be-processed data may include following. The first combined data may be encrypted using a preset encryption algorithm to generate the first to-be-processed data. The preset encryption algorithm may include any one of an AES (advanced encryption standard) algorithm, a DES (data encryption standard) algorithm, a 3DES (triple DES) algorithm, and a SM4 algorithm, or any other encryption algorithm, which may not be limited by the present disclosure.

Signature calculation may refer to an algorithm for digital signature. A digital signature may include a digital string that is generated by the sender and cannot be forged. The digital string may be an effective proof of the authenticity of the information sent by the sender. When verifying the signature, when the input data is inconsistent, the signature value may be different. The receiver may recalculate the signature of the data, and may compare the recalculated signature of the data with the original stored signature, to check whether the data has been rewritten, and to verify whether the data has been fully sent to the receiver without being tampered and deleted.

The first fixed data may undergo multiple encryption and signature calculations, and the result obtained each time may be the same, in other words, a fixed result may be obtained. When performing multiple encryption and signature calculations on the combined data of the first variable data and the first fixed data, because the first variable data is different each time, the results obtained by performing multiple encryption and signature calculations on the combined data of the first variable data and the first fixed data may be different, in other words, variable results may be obtained. The analysis of the variable results may be more difficult than the analysis of the fixed result, thereby improving the security and reliability of the authentication data. In addition, because the first fixed data and the first variable data are combined to obtain the first combined data, a data length of the first combined data may be greater than a data length of the first fixed data. The encryption difficulty of the first combined data may increase, and the decryption difficulty of the first combined data may increase, thereby further improving the security and reliability of the authentication data.

The image forming control unit 21 may receive the authentication data sent by the consumable chip 30 based on the authentication request. The authentication data may be obtained by performing a calculation on the first fixed data representing the attribute information of the consumable and the first variable data representing the consumption information of the consumable based on the first preset algorithm.

The image forming control unit 21 may be further configured to obtain second fixed data representing attribute information of the consumable and second variable data representing consumption information of the consumable, and to generate reference data by performing a calculation on the second fixed data and the second variable data based on the first preset algorithm. The image forming control unit 21 may be further configured to determine whether the authentication data and the reference data are consistent, to determine whether the consumable meets expectation.

The second fixed data may include the serial number of the consumable, the model of the consumable, the capacity of the consumable, or any other fixed attribute information of the consumable. The second fixed data may be fixedly stored in the image forming apparatus 20, and the second fixed data may not change with the execution of image formation. The serial number of the consumable may be used as the identification information of the consumable, to prevent the consumable that does not have the corresponding serial number from being installed on the image forming apparatus 20.

The image forming control unit 21 may obtain the second fixed data and the second variable data from the consumable chip 30. In another embodiment, the image forming control unit 21 may obtain the first fixed data, and may configure the first fixed data as the second fixed data; and may obtain the first variable data, and may configure the first variable data as the second variable data.

The second variable data may include information of a quantity of printed pages, remaining amount of the consumable, consumption amount of the consumable, or any other rewritable consumption information of the consumable. The second variable data may be rewritten or changed according to the consumption status of the consumable in the image forming operation performed by the image forming apparatus 20. The second variable data may be saved after the image forming apparatus 20 has performed the image forming operation.

The image forming control unit 21 may generate the reference data by performing a calculation on the second fixed data and the second variable data based on the first preset algorithm, which may include: combining the second fixed data and the second variable data to generate second combined data; encrypting the second combined data to generate second to-be-processed data; performing signature calculation on the second to-be-processed data to generate second signature data; and encrypting the second to-be-processed data and the second signature data to generate the reference data.

Combining the second fixed data and the second variable data to generate the second combined data may include following. In one embodiment, each of the second fixed data and the second variable data may be an entirety, and the two entireties may be spliced without changing the specific content of the second fixed data and the second variable data to generate the second combined data. In another embodiment, the second fixed data may be split to obtain a plurality of third split data, and the second variable data may be split to obtain a plurality of fourth split data. The plurality of third split data and the plurality of fourth split data may be arranged according to a preset arrangement rule to generate the second combined data. In certain embodiments, a part of the plurality of third split data and a part of the plurality of fourth split data may be extracted and randomly arranged to generate the second combined data. The second fixed data and the second variable data may be combined in any other method, which may not be limited by the present disclosure.

Encrypting the second combined data to generate the second to-be-processed data may include following. The second combined data may be encrypted using a preset encryption algorithm to generate the second to-be-processed data. The preset encryption algorithm may include any one of an AES (advanced encryption standard) algorithm, a DES (data encryption standard) algorithm, a 3DES (triple DES) algorithm, and a SM4 algorithm, or any other encryption algorithm, which may not be limited by the present disclosure.

The second fixed data may undergo multiple encryption and signature calculations, and the result obtained each time may be the same, in other words, a fixed result may be obtained. When performing multiple encryption and signature calculations on the combined data of the second variable data and the second fixed data, because the second variable data is different each time, the results obtained by performing multiple encryption and signature calculations on the combined data of the second variable data and the second fixed data may be different, in other words, variable results may be obtained. The analysis of the variable results may be more difficult than the analysis of the fixed result, thereby improving the security and reliability of the reference data. In addition, because the second fixed data and the second variable data are combined to obtain the second combined data, a data length of the second combined data may be greater than a data length of the second fixed data. The encryption difficulty of the second combined data may increase, and the decryption difficulty of the second combined data may increase, thereby further improving the security and reliability of the reference data.

In one embodiment, the image forming control unit 21 may be further configured to send a parameter acquisition request to the consumable chip 30. The parameter acquisition request may be a request signal for the image forming apparatus 20 to obtain preset parameters from the consumable chip 30.

The chip control unit 31 may be further configured to receive the parameter acquisition request sent by the image forming apparatus 20, and obtain preset parameters provided by the consumable chip 30 based on the parameter acquisition request. The chip control unit 31 may be further configured to generate conversion data corresponding to the preset parameters by performing a calculation on the authentication data and the preset parameters based on a second preset algorithm, and to send the conversion data to the image forming apparatus 20, such that the image forming apparatus 20 may execute a preset strategy based on the conversion data.

The image forming apparatus may receive the conversion data sent by the consumable chip 30 based on the parameter acquisition request. The conversion data may be generated by performing a calculation on the authentication data and the preset parameters provided by the consumable chip 30 based on the second preset algorithm. The image forming control unit 21 may be further configured to execute the preset strategy based on the reference data and the conversion data.

The preset parameters may include image forming control parameters and consumable parameters. The image forming control parameters may include control parameters used by the image forming apparatus 20 for performing an imaging operation. The image forming control parameters may include at least one of a high voltage compensation parameter corresponding to environmental parameter, a calibration parameter in a colorful image forming manner, a transfer voltage and a developing voltage.

The consumables chip 30 may store the preset parameters in plaintext, or may store the preset parameters in ciphertext.

When the consumable chip 30 stores the preset parameters in plaintext, after receiving the parameter acquisition request sent by the image forming apparatus 20, the chip control unit 31 may generate the conversion data corresponding to the preset parameters by performing a calculation on the authentication data and the preset parameters based on the second preset algorithm. Then, the chip control unit 31 may send the conversion data to the image forming apparatus 20. After receiving the conversion data, the image forming control unit 21 may decrypt the conversion data based on the reference data and the second preset algorithm.

When the consumable chip 30 stores the preset parameters in the form of ciphertext, the chip control unit 31 may encrypt the preset parameters using the authentication data based on the second preset algorithm, to generate the conversion data corresponding to the preset parameters. The consumable chip 30 may store the preset parameters. After receiving the parameter acquisition request sent by the image forming apparatus 20, the chip control unit 31 may send the conversion data to the image forming apparatus 20. After receiving the conversion data, the image forming control unit 21 may decrypt the conversion data based on the reference data and the second preset algorithm.

When the preset parameters include image forming control parameters, the preset strategy may include determining whether the consumable meets expectation according to the image forming control parameters. In other words, the image forming control unit 21 may determine whether the consumable meets expectation according to the image forming control parameters. When it is determined that the consumable meets expectation, the consumable may be used for imaging. The image forming control unit 21 may adjust the characteristics of the image forming control parameters, thereby improving the image forming effect.

When the preset parameters include consumable parameters, the preset strategy may include obtaining information of the consumable according to the consumable parameters. The image forming control unit 21 may obtain information related to the consumable through the consumable parameters.

In one embodiment, the chip control unit 31 may generate the conversion data by performing an encryption calculation on the preset parameters using the authentication data obtained by performing a calculation on the first fixed data and the first variable data. Then, the chip control unit 31 may send the conversion data to the image forming control unit 21. The image forming control unit 21 may decrypt the conversion data using the reference data obtained by performing a calculation on the second fixed data and the second variable data. Because the authentication data and the reference data are dynamically variable, the authentication data may be used to encrypt the preset parameters, which may improve the difficulty of data analysis. Further, the authentication data may be updated in real time, which may make it substantially difficult to crack the conversion data, thereby enhancing the security and reliability of the data sent by the chip control unit 31 to the image forming control unit 21, and may prevent the data sent by the chip control unit 31 to the image forming control unit 21 from being maliciously intercepted and embezzled.

In the disclosed image forming apparatus 20 and the consumable chip 30, the chip control unit 31 of the consumable chip 30 may generate the authentication data using the stored first fixed data and the first variable data. The image forming apparatus 20 may authenticate the consumable chip 30 using the authentication data. Because the authentication data is dynamically variable, the authentication data received by the image forming apparatus 20 may be highly reliable, and the image forming apparatus 20 may accurately authenticate the consumable, ensuring that the authenticated consumable is the designated consumable that meets the quality requirements, and preventing the image forming apparatus 20 from being damaged and the image forming quality from being affected due to the use of any other consumable that does not meet the quality requirements.

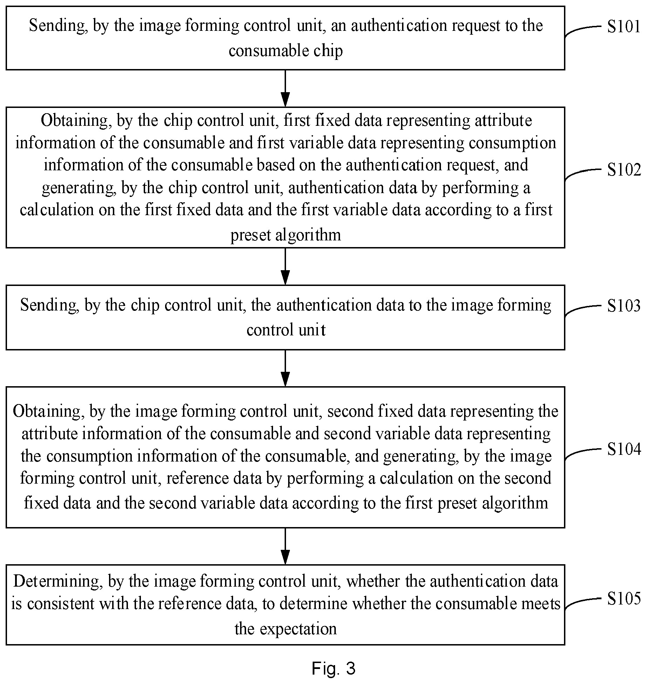

Figure 3 illustrates a schematic flowchart of a communication method between an image forming apparatus and a consumable chip consistent with an embodiment of the present disclosure. The method may be applied to the image forming apparatus and the consumable chip. Referring to Figure 3, the image forming apparatus may be detachably installed with a consumable, and the consumable may be installed with the consumable chip. The image forming apparatus may include an image forming control unit, and the consumable chip may include a chip control unit. The method may include following.

S101: sending, by the image forming control unit, an authentication request to the consumable chip.

S102: based on the authentication request, obtaining, by the chip control unit, first fixed data representing attribute information of the consumable and first variable data representing consumption information of the consumable, and generating, by the chip control unit, authentication data by performing a calculation on the first fixed data and the first variable data according to a first preset algorithm.

S103: sending, by the chip control unit, the authentication data to the image forming control unit.

S104: obtaining, by the image forming control unit, second fixed data representing attribute information of the consumable and second variable data representing consumption information of the consumable, and generating, by the image forming control unit, reference data by performing a calculation on the second fixed data and the second variable data according to the first preset algorithm.

S105: determining, by the image forming control unit, whether the authentication data is consistent with the reference data, to determine whether the consumable meets the expectation.

After determining that the consumable meets the expectation in S105, the first variable data may include information of a quantity of printed pages, remaining amount of the consumable and consumption amount of the consumable, and the first fixed data may include the serial number of the consumable, the model of the consumable, and the capacity of the consumable. The second variable data may include information of a quantity of printed pages, remaining amount of the consumable and consumption amount of the consumable, and the second fixed data may include the serial number of the consumable, the model of the consumable, and the capacity of the consumable.

In the disclosed communication method between the image forming apparatus and the consumable chip, the chip control unit of the consumable chip may generate the authentication data using the stored first fixed data representing attribute information of the consumable and first variable data representing the consumption information of the consumable. The image forming apparatus may authenticate the consumable chip using the authentication data. Because the authentication data is dynamically variable, the authentication data received by the image forming apparatus may be highly reliable, and the image forming apparatus may accurately authenticate the consumable, ensuring that the authenticated consumable is the designated consumable that meets the quality requirements, and preventing the image forming apparatus from being damaged and the image forming quality from being affected due to the use of any other consumable that does not meet the quality requirements.

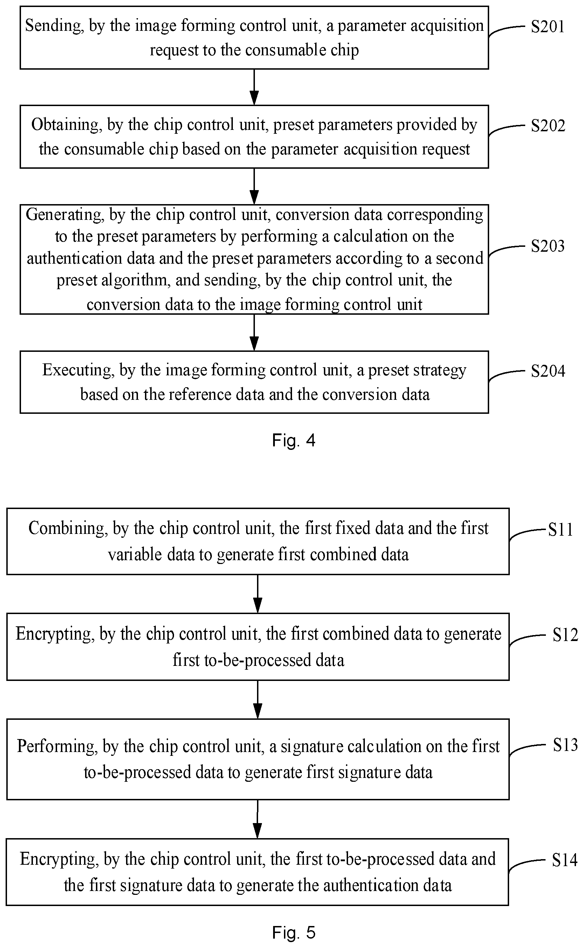

Referring to Figure 4, in one embodiment, the above-disclosed method may further include following.

S201: sending, by the image forming control unit, a parameter acquisition request to the consumable chip.

S202: obtaining, by the chip control unit, preset parameters provided by the consumable chip based on the parameter acquisition request.

S203: generating, by the chip control unit, conversion data corresponding to the preset parameters by performing a calculation on the authentication data and the preset parameters based on a second preset algorithm, and sending, by the chip control unit, the conversion data to the image forming control unit.

S204: executing, by the image forming control unit, a preset strategy based on the reference data and the conversion data.

When the preset parameters include image forming control parameters, the preset strategy may include determining whether the consumable meets expectation according to the image forming control parameters, and adjusting the characteristics of the image forming control parameters to improve the image forming effect.

When the preset parameters include consumable parameters, the preset strategy may include obtaining information of the consumable according to the consumable parameters.

The chip control unit may generate the conversion data by performing an encryption calculation on the preset parameters using the authentication data. Then, the chip control unit may send the conversion data to the image forming control unit. The image forming control unit may decrypt the conversion data using the reference data, and may execute the preset strategy according to the decrypted data. Because the authentication data and the reference data are dynamically variable, the authentication data may be used to encrypt the preset parameters, which may improve the difficulty of data analysis. Further, the authentication data may be updated in real time, which may make it substantially difficult to crack the conversion data, thereby enhancing the security and reliability of the data sent by the chip control unit to the image forming control unit, and may prevent the data sent by the chip control unit to the image forming control unit from being maliciously intercepted and embezzled.

Referring to Figure 5, S102 may specifically include following.

S11: combining, by the chip control unit, the first fixed data and the first variable data to generate first combined data.

S12: encrypting, by the chip control unit, the first combined data to generate first to-be-processed data.

S13: performing, by the chip control unit, a signature calculation on the first to-be-processed data to generate first signature data.

S14: encrypting, by the chip control unit, the first to-be-processed data and the first signature data to generate the authentication data.

The first fixed data may undergo multiple encryption and signature calculations, and the result obtained each time may be the same, in other words, a fixed result may be obtained. When performing multiple encryption and signature calculations on the combined data of the first variable data and the first fixed data, because the first variable data is different each time, the results obtained by performing multiple encryption and signature calculations on the combined data of the first variable data and the first fixed data may be different, in other words, variable results may be obtained. The analysis of the variable results may be more difficult than the analysis of the fixed result, thereby improving the security and reliability of the authentication data. In addition, because the first fixed data and the first variable data are combined to obtain the first combined data, a data length of the first combined data may be greater than a data length of the first fixed data. The encryption difficulty of the first combined data may increase, and the decryption difficulty of the first combined data may increase, thereby further improving the security and reliability of the authentication data.

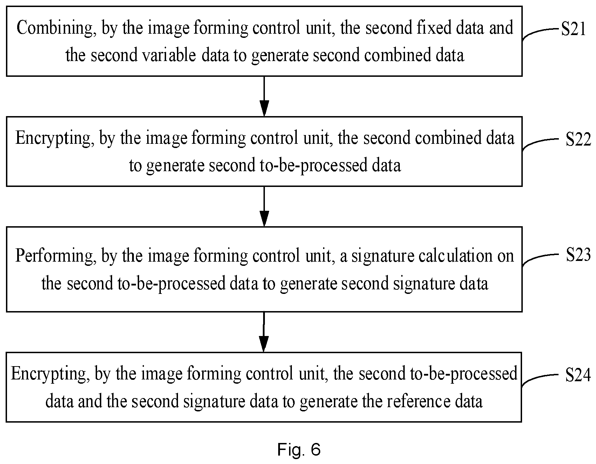

Referring to Figure 6, S104 may specifically include following.

S21: combining, by the image forming control unit, the second fixed data and the second variable data to generate second combined data.

S22: encrypting, by the image forming control unit, the second combined data to generate second to-be-processed data.

S23: performing, by the image forming control unit, a signature calculation on the second to-be-processed data to generate second signature data.

S24: encrypting, by the image forming control unit, the second to-be-processed data and the second signature data to generate the reference data.

The second fixed data may undergo multiple encryption and signature calculations, and the result obtained each time may be the same, in other words, a fixed result may be obtained. When performing multiple encryption and signature calculations on the combined data of the second variable data and the second fixed data, because the second variable data is different each time, the results obtained by performing multiple encryption and signature calculations on the combined data of the second variable data and the second fixed data may be different, in other words, variable results may be obtained. The analysis of the variable results may be more difficult than the analysis of the fixed result, thereby improving the security and reliability of the reference data. In addition, because the second fixed data and the second variable data are combined to obtain the second combined data, a data length of the second combined data may be greater than a data length of the second fixed data. The encryption difficulty of the second combined data may increase, and the decryption difficulty of the second combined data may increase, thereby further improving the security and reliability of the reference data.

The technical features of the above embodiments can be combined arbitrarily. For the sake of conciseness of description, all possible combinations of the technical features in the above embodiments are not described. However, as long as the combination of these technical features is not contradictory, it should be considered as the scope of this specification.

It should be noted that the disclosed embodiments are merely examples for illustrating the technical solutions of the present disclosure, but are not limited thereto. scope of protection of the present disclosure shall be subject to the attached claims.

## Claims

1. A consumable chip (30), wherein the consumable chip (30) is capable of being installed on a consumable, the consumable is capable of being detachably installed on an image forming apparatus (20), and the consumable chip (30) comprising:
a first storage unit (32), configured to store first fixed data representing attribute information of the consumable;
a chip control unit (31), configured to:
receive an authentication request sent by the image forming apparatus (20), and
obtain the first fixed data and first variable data representing consumption information of the consumable based on the authentication request, **characterised in that** the chip control unit (31) is further configured to:
generate authentication data by performing a calculation on the first fixed data and the first variable data according to a first preset algorithm, and
send the authentication data to the image forming apparatus (20), wherein the authentication data is usable, by the image forming control unit, to determine whether the authentication data is consistent with reference data, to determine whether the consumable is a designated consumable that meets predetermined quality requirements.

2. The consumable chip (30) according to claim 1, wherein the chip control unit (31) is further configured to:
receive a parameter acquisition request sent by the image forming apparatus (20),
obtain preset parameters provided by the consumable chip (30) based on the parameter acquisition request,
generate conversion data corresponding to the preset parameters by performing a calculation on the authentication data and the preset parameters according to a second preset algorithm, and
send the conversion data to the image forming apparatus (20), wherein the conversion data is configured to execute a preset strategy.

3. The consumable chip (30) according to claim 2, wherein:
the preset parameters include image forming control parameters, and
the preset strategy includes determining whether the consumable meets the predetermined quality requirements according to the image forming control parameters.

4. The consumable chip (30) according to any one of claim 1 to 3, wherein:
the first variable data includes information of a quantity of printed pages, remaining amount of the consumable, and consumption amount of the consumable, and
the first fixed data includes a serial number of the consumable, a model of the consumable, capacity of the consumable.

5. A consumable, comprising:
a case;
a developer accommodating unit (11), disposed in the case and configured to accommodate developer; and
a consumable chip (30) according to any one of claims 1 to 3.

6. The consumable according to claim 5, further including:
a developer conveying unit (13), configured to convey the developer.

7. The consumable according to claim 6, further including:
an organic photoconductor, and
a charging roller, configured to charge the organic photoconductor.

8. A consumable, comprising:
an organic photoconductor,
a charging roller, configured to charge the organic photoconductor, and
a consumable chip (30) according to any one of claims 1 to 3.

9. A communication method between an image forming apparatus (20) and a consumable chip (30), applied to the image forming apparatus (20) and the consumable chip (30), the image forming apparatus (20) being detachably installed with a consumable, the consumable being installed with the consumable chip (30), and the consumable chip (30) configured to store first fixed data representing attribute information of the consumable, the image forming apparatus (20) including an image forming control unit (21), the consumable chip (30) including a chip control unit (31), and the communication method comprising:
(S101) sending, by the image forming control unit (21), an authentication request to the consumable chip (30);
(S102) obtaining, by the chip control unit (31), the first fixed data and first variable data representing consumption information of the consumable based on the authentication request, **characterised by** generating, by the chip control unit (31), authentication data by performing a calculation on the first fixed data and the first variable data according to a first preset algorithm;
(S103) sending, by the chip control unit (31), the authentication data to the image forming control unit (21);
(S104) obtaining, by the image forming control unit (21), second fixed data representing the attribute information of the consumable and second variable data representing the consumption information of the consumable, and generating, by the image forming control unit (21), reference data by performing a calculation on the second fixed data and the second variable data according to the first preset algorithm; and
(S105) determining, by the image forming control unit (21), whether the authentication data is consistent with the reference data, to determine whether the consumable is a designated consumable that meets predetermined quality requirements.

10. The method according to claim 9, further including:
(S201) sending, by the image forming control unit (21), a parameter acquisition request to the consumable chip (30),
(S202) obtaining, by the chip control unit (31), preset parameters provided by the consumable chip (30) based on the parameter acquisition request,
(S203) generating, by the chip control unit (31), conversion data corresponding to the preset parameters by performing a calculation on the authentication data and the preset parameters according to a second preset algorithm, and sending, by the chip control unit (31), the conversion data to the image forming control unit (21), and
(S204) executing, by the image forming control unit (21), a preset strategy based on the reference data and the conversion data.

11. The method according to claim 10, wherein:
the preset parameters include image forming control parameters, and
the preset strategy includes determining whether the consumable meets the predetermined quality requirements according to the image forming control parameters.

12. An image forming apparatus (20), the image forming apparatus (20) being installed with a consumable, the consumable being installed with a consumable chip (30) according to any of claims 1-4 configured to store first fixed data representing attribute information of the consumable and the image forming apparatus (20) comprising
an image forming control unit (21), configured to:
send an authentication request to the chip control unit (31),
receive authentication data generated and sent by the consumable chip (30) based on the authentication request, **characterised in that** the authentication data is obtained by performing a calculation on the first fixed data and first variable data representing consumption information of the consumable according to a first preset algorithm,
obtain second fixed data representing the attribute information of the consumable and second variable data representing the consumption information of the consumable, and generate reference data by performing a calculation on the second fixed data and the second variable data according to the first preset algorithm, and
determine whether the authentication data is consistent with the reference data, to determine whether the consumable is a designated consumable that meets predetermined quality requirements.

## Patentansprüche

1. Verbrauchsmaterialchip (30), wobei der Verbrauchsmaterialchip (30) an einem Verbrauchsmaterial installiert werden kann, wobei das Verbrauchsmaterial herausnehmbar in einer Bilderzeugungsvorrichtung (20) installiert werden kann, und wobei der Verbrauchsmaterialchip (30) umfasst:
eine erste Speichereinheit (32), die dafür konfiguriert ist, erste feste Daten zu speichern, die Attributinformationen des Verbrauchsmaterials darstellen;
eine Chipsteuereinheit (31), die konfiguriert ist zum:
Empfangen einer Authentifizierungsanforderung, die durch die Bilderzeugungsvorrichtung (20) gesendet wurde, und
Erhalten der ersten festen Daten und erster variabler Daten, die Verbrauchsinformationen des Verbrauchsmaterials darstellen, auf der Grundlage der Authentifizierungsanforderung,
**dadurch gekennzeichnet, dass** die Chipsteuereinheit (31) des Weiteren konfiguriert ist zum:
Generieren von Authentifizierungsdaten mittels Durchführen einer Berechnung an den ersten festen Daten und den ersten variablen Daten gemäß einem ersten voreingestellten Algorithmus, und
Senden der Authentifizierungsdaten an die Bilderzeugungsvorrichtung (20), wobei die Authentifizierungsdaten durch die Bilderzeugungssteuereinheit verwendet werden können, um zu bestimmen, ob die Authentifizierungsdaten mit Referenzdaten übereinstimmen, um zu bestimmen, ob das Verbrauchsmaterial ein bezeichnetes Verbrauchsmaterial ist, das vorgegebene Qualitätsanforderungen erfüllt.

2. Verbrauchsmaterialchip (30) nach Anspruch 1, wobei die Chipsteuereinheit (31) des Weiteren konfiguriert ist zum:
Empfangen einer Parametererfassungsanforderung, die durch die Bilderzeugungsvorrichtung (20) gesendet wurde,
Erhalten voreingestellter Parameter, die durch den Verbrauchsmaterialchip (30) bereitgestellt werden, auf der Grundlage der Parametererfassungsanforderung,
Generieren von Konvertierungsdaten, die den voreingestellten Parametern entsprechen, mittels Durchführen einer Berechnung an den Authentifizierungsdaten und den voreingestellten Parametern gemäß einem zweiten voreingestellten Algorithmus, und
Senden der Konvertierungsdaten an die Bilderzeugungsvorrichtung (20), wobei die Konvertierungsdaten dafür konfiguriert sind, eine voreingestellte Strategie auszuführen.

3. Verbrauchsmaterialchip (30) nach Anspruch 2, wobei:
die voreingestellten Parameter Bilderzeugungssteuerungsparameter enthalten, und
die voreingestellte Strategie umfasst, gemäß den Bilderzeugungssteuerungsparametern zu bestimmen, ob das Verbrauchsmaterial die vorgegebenen Qualitätsanforderungen erfüllt.

4. Verbrauchsmaterialchip (30) nach einem der Ansprüche 1 bis 3, wobei:
die ersten variablen Daten Informationen über eine Anzahl gedruckter Seiten, eine Restmenge des Verbrauchsmaterials und die Verbrauchsmenge des Verbrauchsmaterials enthalten, und
die ersten festen Daten eine Seriennummer des Verbrauchsmaterials, ein Modell des Verbrauchsmaterials und die Kapazität des Verbrauchsmaterials enthalten.

5. Verbrauchsmaterial, das umfasst:
ein Gehäuse;
eine Entwickleraufnahmeeinheit (11), die in dem Gehäuse angeordnet und dafür konfiguriert ist, Entwickler aufzunehmen; und
einen Verbrauchsmaterialchip (30) nach einem der Ansprüche 1 bis 3.

6. Verbrauchsmaterial nach Anspruch 5, das des Weiteren umfasst:
eine Entwicklertransporteinheit (13), die zum Transportieren des Entwicklers konfiguriert ist.

7. Verbrauchsmaterial nach Anspruch 6, das des Weiteren umfasst:
einen organischen Fotoleiter, und
eine Aufladewalze, die zum Aufladen des organischen Fotoleiters konfiguriert ist.

8. Verbrauchsmaterial, das umfasst:
einen organischen Fotoleiter, und
eine Aufladewalze, die zum Aufladen des organischen Fotoleiters konfiguriert ist, und
einen Verbrauchsmaterialchip (30) nach einem der Ansprüche 1 bis 3.

9. Kommunikationsverfahren zwischen einer Bilderzeugungsvorrichtung (20) und einem Verbrauchsmaterialchip (30), das auf die Bilderzeugungsvorrichtung (20) und den Verbrauchsmaterialchip (30) angewendet wird, wobei in die Bilderzeugungsvorrichtung (20) ein Verbrauchsmaterial herausnehmbar installiert ist, wobei an dem Verbrauchsmaterial das Verbrauchsmaterialchip (30) installiert ist, und wobei der Verbrauchsmaterialchip (30) dafür konfiguriert ist, erste feste Daten zu speichern, die Attributinformationen des Verbrauchsmaterials darstellen, wobei die Bilderzeugungsvorrichtung (20) eine Bilderzeugungssteuereinheit (21) enthält,
wobei der Verbrauchsmaterialchip (30) eine Chipsteuereinheit (31) enthält, und das Kommunikationsverfahren umfasst:
(S101) Senden, durch die Bilderzeugungssteuereinheit (21), einer Authentifizierungsanforderung an den Verbrauchsmaterialchip (30);
(S102) Erhalten, durch die Chipsteuereinheit (31), der ersten festen Daten und der ersten variablen Daten, die Verbrauchsinformationen des Verbrauchsmaterials darstellen, auf der Grundlage der Authentifizierungsanforderung, **gekennzeichnet durch** Generieren, durch die Chipsteuereinheit (31), von Authentifizierungsdaten mittels Durchführen einer Berechnung an den ersten festen Daten und den ersten variablen Daten gemäß einem ersten voreingestellten Algorithmus;
(S103) Senden, durch die Chipsteuereinheit (31), der Authentifizierungsdaten an die Bilderzeugungssteuereinheit (21);
(S104) Erhalten, durch die Bilderzeugungssteuereinheit (21), zweiter fester Daten, die die Attributinformationen des Verbrauchsmaterials darstellen, und zweiter variabler Daten, die die Verbrauchsinformationen des Verbrauchsmaterials darstellen, und Generieren, durch die Bilderzeugungssteuereinheit (21), von Referenzdaten mittels Durchführen einer Berechnung an den zweiten festen Daten und den zweiten variablen Daten gemäß dem ersten voreingestellten Algorithmus; und
(S105) Bestimmen, durch die Bilderzeugungssteuereinheit (21), ob die Authentifizierungsdaten mit den Referenzdaten übereinstimmen, um zu bestimmen, ob das Verbrauchsmaterial ein bezeichnetes Verbrauchsmaterial ist, das vorgegebene Qualitätsanforderungen erfüllt.

10. Verfahren nach Anspruch 9, das des Weiteren umfasst:
(S201) Senden, durch die Bilderzeugungssteuereinheit (21), einer Parametererfassungsanforderung an den Verbrauchsmaterialchip (30),
(S202) Erhalten, durch die Chipsteuereinheit (31), voreingestellter Parameter, die durch den Verbrauchsmaterialchip (30) bereitgestellt werden, auf der Grundlage der Parametererfassungsanforderung,
(S203) Generieren, durch die Chipsteuereinheit (31), von Konvertierungsdaten, die den voreingestellten Parametern entsprechen, mittels Durchführen einer Berechnung an den Authentifizierungsdaten und den voreingestellten Parametern gemäß einem zweiten voreingestellten Algorithmus, und Senden, durch die Chipsteuereinheit (31), der Konvertierungsdaten an die Bilderzeugungssteuereinheit (21), und
(S204) Ausführen, durch die Bilderzeugungssteuereinheit (21), einer voreingestellten Strategie auf der Grundlage der Referenzdaten und der Konvertierungsdaten.

11. Verfahren nach Anspruch 10, wobei:
die voreingestellten Parameter Bilderzeugungssteuerungsparameter enthalten, und
die voreingestellte Strategie umfasst, gemäß den Bilderzeugungssteuerungsparametern zu bestimmen, ob das Verbrauchsmaterial die vorgegebenen Qualitätsanforderungen erfüllt.

12. Bilderzeugungsvorrichtung (20), wobei in die Bilderzeugungsvorrichtung (20) ein Verbrauchsmaterial installiert ist, wobei an dem Verbrauchsmaterial ein Verbrauchsmaterialchip (30) nach einem der Ansprüche 1-4 installiert ist, der dafür konfiguriert ist, erste feste Daten zu speichern, die Attributinformationen des Verbrauchsmaterials darstellen, und wobei die Bilderzeugungsvorrichtung (20) umfasst:
eine Bilderzeugungssteuereinheit (21), die konfiguriert ist zum:
Senden einer Authentifizierungsanforderung an die Chipsteuereinheit (31),
Empfangen von Authentifizierungsdaten, die durch den Verbrauchsmaterialchip (30) generiert und gesendet wurden, auf der Grundlage der Authentifizierungsanforderung, **dadurch gekennzeichnet, dass** die Authentifizierungsdaten mittels Durchführen einer Berechnung an den ersten festen Daten und den ersten variablen Daten, die Verbrauchsinformationen des Verbrauchsmaterials darstellen, gemäß einem ersten voreingestellten Algorithmus erhalten werden,
Erhalten zweiter fester Daten, die die Attributinformationen des Verbrauchsmaterials darstellen, und zweiter variabler Daten, die die Verbrauchsinformationen des Verbrauchsmaterials darstellen, und Generieren von Referenzdaten mittels Durchführen einer Berechnung an den zweiten festen Daten und den zweiten variablen Daten gemäß dem ersten voreingestellten Algorithmus, und
Bestimmen, ob die Authentifizierungsdaten mit den Referenzdaten übereinstimmen, um zu bestimmen, ob das Verbrauchsmaterial ein bezeichnetes Verbrauchsmaterial ist, das vorgegebene Qualitätsanforderungen erfüllt.

## Revendications

1. Puce de consommable (30), dans laquelle la puce de consommable (30) peut être installée sur un consommable, le consommable peut être installé de manière amovible sur un appareil de formation d'image (20), et la puce de consommable (30) comprend :
une première unité de stockage (32), configurée pour stocker des premières données fixes représentant de l'information d'attribut du consommable ;
une unité de contrôle de puce (31), configurée pour :
recevoir une demande d'authentification envoyée par l'appareil de formation d'image (20), et
obtenir les premières données fixes et les premières données variables représentant de l'information de consommation du consommable sur la base de la demande d'authentification, **caractérisée en ce que** l'unité de contrôle de puce (31) est en outre configurée pour :
générer des données d'authentification en mettant en oeuvre un calcul sur les premières données fixes et les premières données variables selon un premier algorithme prédéfini, et
envoyer les données d'authentification à l'appareil de formation d'image (20), dans laquelle les données d'authentification sont utilisables, par l'unité de contrôle de formation d'image, pour déterminer si les données d'authentification sont cohérentes ou non avec des données de référence, pour déterminer si le consommable est ou non un consommable désigné qui répond à des exigences de qualité prédéterminées.

2. Puce de consommable (30) selon la revendication 1, dans laquelle l'unité de contrôle de puce (31) est en outre configurée pour :
recevoir une demande d'acquisition de paramètres envoyée par l'appareil de formation d'image (20),
obtenir des paramètres prédéfinis fournis par la puce de consommable (30) sur la base de la demande d'acquisition de paramètres,
générer des données de conversion correspondant aux paramètres prédéfinis en mettant en oeuvre un calcul sur les données d'authentification et les paramètres prédéfinis selon un deuxième algorithme prédéfini, et
envoyer les données de conversion à l'appareil de formation d'image (20), dans laquelle les données de conversion sont configurées pour exécuter une stratégie prédéfinie.

3. Puce de consommable (30) selon la revendication 2, dans laquelle :
les paramètres prédéfinis comprennent des paramètres de contrôle de formation d'image, et
la stratégie prédéfinie comprend la détermination du fait que le consommable répond ou non aux exigences de qualité prédéterminées en fonction des paramètres de contrôle de formation d'image.

4. Puce de consommable (30) selon l'une quelconque des revendications 1 à 3, dans laquelle :
les premières données variables comprennent de l'information sur la quantité de pages imprimées, la quantité restante du consommable, et la quantité de consommation du consommable, et
les premières données fixes comprennent un numéro de série du consommable, un modèle du consommable, et la capacité du consommable.

5. Consommable, comprenant :
un boîtier ;
une unité de stockage de révélateur (11), disposée dans le boîtier et configurée pour stocker le révélateur ; et
une puce de consommable (30) selon l'une quelconque des revendications 1 à 3.

6. Consommable selon la revendication 5, comprenant en outre :
une unité de transport de révélateur (13), configurée pour transporter le révélateur.

7. Consommable selon la revendication 6, comprenant en outre :
un photoconducteur organique, et
un rouleau de charge, configuré pour charger le photoconducteur organique.

8. Consommable, comprenant :
un photoconducteur organique,
un rouleau de charge, configuré pour charger le photoconducteur organique, et
une puce de consommable (30) selon l'une quelconque des revendications 1 à 3.

9. Procédé de communication entre un appareil de formation d'image (20) et une puce de consommable (30), appliqué à l'appareil de formation d'image (20) et à la puce de consommable (30), l'appareil de formation d'image (20) étant installé de manière amovible avec un consommable, le consommable étant installé avec la puce de consommable (30), et la puce de consommable (30) étant configurée pour stocker des premières données fixes représentant de l'information d'attribut du consommable, l'appareil de formation d'image (20) comprenant une unité de contrôle de formation d'image (21), la puce de consommable (30) comprenant une unité de contrôle de puce (31), et le procédé de communication comprenant :
(S101) l'envoi, par l'unité de contrôle de formation d'image (21), d'une demande d'authentification à la puce de consommable (30) ;
(S102) l'obtention, par l'unité de contrôle de puce (31), des premières données fixes et des premières données variables représentant de l'information de consommation du consommable sur la base de la demande d'authentification,
**caractérisé par**
la génération, par l'unité de contrôle de puce (31), de données d'authentification en mettant en oeuvre un calcul sur les premières données fixes et les premières données variables selon un premier algorithme prédéfini ;
(S103) l'envoi, par l'unité de contrôle de puce (31), des données d'authentification à l'unité de contrôle de formation d'image (21) ;
(S104) l'obtention, par l'unité de contrôle de formation d'image (21), de deuxièmes données fixes représentant l'information d'attribut du consommable et de deuxièmes données variables représentant l'information de consommation du consommable, et la génération, par l'unité de contrôle de formation d'image (21), de données de référence en mettant en oeuvre un calcul sur les deuxièmes données fixes et les deuxièmes données variables conformément au premier algorithme prédéfini ; et
(S105) la détermination, par l'unité de contrôle de formation d'image (21), du fait que les données d'authentification sont ou non cohérentes avec les données de référence, pour déterminer si le consommable est ou non un consommable désigné qui répond à des exigences de qualité prédéterminées.

10. Procédé selon la revendication 9, comprenant en outre :
(S201) l'envoi, par l'unité de contrôle de formation d'image (21), d'une demande d'acquisition de paramètres à la puce de consommable (30),
(S202) l'obtention, par l'unité de contrôle de puce (31), de paramètres prédéfinis fournis par la puce de consommable (30) sur la base de la demande d'acquisition de paramètres,
(S203) la génération, par l'unité de contrôle de puce (31), de données de conversion correspondant aux paramètres prédéfinis en mettant en oeuvre un calcul sur les données d'authentification et les paramètres prédéfinis selon un deuxième algorithme prédéfini, et l'envoi, par l'unité de contrôle de puce (31), des données de conversion à l'unité de contrôle de formation d'image (21), et
(S204) l'exécution, par l'unité de contrôle de formation d'image (21), d'une stratégie prédéfinie sur la base des données de référence et des données de conversion.

11. Procédé selon la revendication 10, dans lequel :
les paramètres prédéfinis comprennent des paramètres de contrôle de formation d'image, et
la stratégie prédéfinie comprend la détermination du fait que le consommable répond ou non aux exigences de qualité prédéterminées en fonction des paramètres de contrôle de formation d'image.

12. Appareil de formation d'image (20), l'appareil de formation d'image (20) étant installé avec un consommable, le consommable étant installé avec une puce de consommable (30) selon l'une quelconque des revendications 1 à 4, configurée pour stocker des premières données fixes représentant de l'information d'attribut du consommable et de l'appareil de formation d'image (20), comprenant
une unité de contrôle de formation d'image (21), configurée pour :
envoyer une demande d'authentification à l'unité de contrôle de puce (31),
recevoir des données d'authentification générées et envoyées par la puce de consommable (30) sur la base de la demande d'authentification, **caractérisé en ce que** les données d'authentification sont obtenues en mettant en oeuvre un calcul sur les premières données fixes et les premières données variables représentant de l'information de consommation du consommable selon un premier algorithme prédéfini,
obtenir des deuxièmes données fixes représentant l'information d'attribut du consommable et des deuxièmes données variables représentant l'information de consommation du consommable, et générer des données de référence en mettant en oeuvre un calcul sur les deuxièmes données fixes et les deuxièmes données variables conformément au premier algorithme prédéfini, et
déterminer si les données d'authentification sont ou non cohérentes avec les données de référence, afin de déterminer si le consommable est un consommable désigné qui répond à des exigences de qualité prédéterminées.
